# EUROPÄISCHE PATENTANMELDUNG

(11) **EP 3 736 256 A1**
(43) Veröffentlichungstag der Anmeldung: **11.11.2020**
(21) Anmeldenummer: 20173394.6
(22) Anmeldetag: 07.05.2020
(51) Int. Cl.: C05F 3/00, C05F 3/06, C05F 17/10, C05F 17/40, C05F 17/90

(54) **ANLAGE UND VERFAHREN FÜR DIE BEHANDLUNG VON GÜLLE, MIST UND GÄRRESTEN**

(30) Priorität: 08.05.2019 DE 102019111959
(71) Anmelder: DS Refining B.V., 7622 EZ Borne (NL)
(72) Erfinder: Kiomall, Daniel, 44137 Dortmund (DE); Borre, Fokko Hermann Jan, 7497MT Bentelo (NL)
(74) Vertreter: Bischof, Oliver

(57) **Zusammenfassung**

Die Erfindung betrifft eine Anlage (100) für die Behandlung von Gülle, Mist und Gärresten mit einer Vorrichtung (12) zur Separation von Feststoffen, die sich in Gülle, Mist und Gärresten befinden, wobei die Feststoffe insbesondere grobe Partikel bevorzugt in der Größe zwischen 0,99 mm und 30 µm sind, wobei der Vorrichtung (12) zur Separation von Feststoffen eine Vorrichtung (17) zur Mikrofiltration nachgeschaltet ist und mit dieser verbunden ist. Um eine Anlage zur Verfügung zu stellen, die einen organischen Dünger derart aufbereitet kann, dass dieser frei von Organik ist und gleichzeitig stofflich die Qualität mineralischer bzw. anorganischer Dünger erfüllt, schlägt die Erfindung vor, dass eine Vorrichtung (26) zur Entfernung von organischen Verbindungen der Vorrichtung zur Mikrofiltration (17) nachgeschaltet ist und mit dieser verbunden ist.

## Beschreibung

Die vorliegende Erfindung betrifft eine Anlage für die Behandlung von Gülle, Mist und Gärresten gemäß dem Oberbegriff des Anspruchs 1. Zudem betrifft die Erfindung ein Verfahren für die Behandlung von Gülle, Mist und Gärresten.

Anlagen der eingangs genannten Art sind seit Langem bekannt und werden insbesondere im landwirtschaftlichen Bereich eingesetzt, wo die Auftrennung von Gülle oder Gärresten in eine feste und in eine flüssige Phase wünschenswert ist.

Beispielsweise ist aus der FR 2 724 922 A1 eine Anlage zur Behandlung von Gülle, die organische Verbindungen enthält, bekannt. Hierzu sind in der FR 2 724 922 A1 Vorrichtungen zur Separation von Feststoffen und zur Mikrofiltration vorgesehen, die von der Gülle schrittweise durchlaufen wird, wobei den Vorrichtungen zur Separation von Feststoffen die Vorrichtung zur Mikrofiltration nachgeschaltet ist.

Gülle besteht hauptsächlich aus Wasser mit darin gelösten Nährstoffen und organischer Substanz sowie einigen Mineralstoffen. Wie hoch die jeweiligen Anteile sind, hängt von verschieden Faktoren, wie beispielsweise der Tierart und der Fütterung, ab. Wichtige Nährstoffe, die Gülle zu einem bedeutenden Dünger machen, sind beispielsweise Stickstoff (N), Phosphor (P), Kalium (K), sowie Magnesium (Mg).

Je nach Beigabe von Einstreu, d.h. als Lager für das Vieh in den Stall eingestreutes Stroh o. Ä, mit tierischen Ausscheidungen und Wasser unterscheidet man auch zwischen Dick- oder Dünngülle, Schwemmmist oder Flüssigmist.

Gärrest fällt bei der Produktion von Biogas neben dem Hauptprodukt Methan an. Dieser wird auf landwirtschaftlichen Flächen zur Nährstoffversorgung der Kulturen ähnlich dem Dünger Gülle ausgebracht. Wichtige Nährstoffe sind auch hier beispielsweise Sickstoff (N), Phosphor (P), Kalium (K), sowie Magnesium (Mg).

Bei der landwirtschaftlichen Düngung werden derzeit Gülle, Mist und Gärreste eingesetzt. Diese Düngerstoffe beinhalten ein festgelegtes Nährstoffverhältnis, welches u.a. aus anorganischen Verbindungen wie Stickstoff, Phosphor und Kalium besteht, d.h. benötigt eine Pflanze einen der enthaltenen Nährstoffe nicht oder nicht vollständig (z.B. Phosphor), kommt es zu einer Anreicherung dieses Nährstoffs im Boden.

Ein weiteres Problem ist der relativ hohe Anteil an organischen Verbindungen im Dünger. Veterinär betrachtet, kann hierdurch eine Verbreitung von Erregern durch weitläufige Ausbringung auf großen Flächen erfolgen. Auch Antibiotika, Hormone und Pestizide können über organische Dünger verbreitet werden.

Um die oben beschriebenen Probleme zu minimieren, existieren weltweit Gesetze und Verordnungen zur Reduktion organischer Dünger. In Europa sehen diese beispielsweise eine Begrenzung von 170 kg Stickstoff pro Hektar und Jahr, welcher organisch gedüngt werden darf, vor. Auf der anderen Seite ist die Produktion anorganischer Dünger, um den Nährstoffbedarf zu decken, welcher nicht organisch gedüngt werden darf und nicht aus Gülle, Mist und Gärresten resultiert, energetisch und klimatechnisch aufwendig.

Aufgabe der Erfindung ist daher, eine Anlage der eingangs genannten Art derart weiterzuentwickeln, dass diese Nachteile vermieden werden.

Diese Aufgabe wird durch eine Anlage mit den Merkmalen des Anspruchs 1 und durch ein Verfahren mit den Merkmalen des Anspruchs 6 gelöst. Weitere Vorteile, Merkmale und Details der Erfindung ergeben sich aus den Unteransprüchen, der Beschreibung und den Zeichnungen.

Vorrichtungen zur Separation von Feststoffen, die sich in Gülle, Mist und Gärresten befinden, sowie Vorrichtungen zur Mikrofiltration als auch Vorrichtungen zur Entfernung von organischen Verbindungen im Rahmen der Behandlung von Gülle, Mist und Gärresten sind aus dem Stand der Technik bekannt.

Kernidee der Erfindung ist es jedoch, diese Vorrichtungen in einer Anlage so anzuordnen, dass ein organischer Dünger derart aufbereitet wird, dass dieser frei von Organik ist und gleichzeitig stofflich die Qualität mineralischer bzw. anorganischer Dünger erfüllt. Dieser Dünger fällt dann vorteilhafterweise nicht mehr unter die gesetzlichen Limitierungen für organischen Dünger. Beispielsweise soll ein Dünger produziert werden, bei dem die Konzentration an Stickstoff des produzierten Düngers mehr als 8 % beträgt und der Anteil an Organik in Form des "totalen organischen Kohlenstoffs" (TOC) unter 30 ppm liegt.

Es hat sich gezeigt, dass hierzu zunächst eine Vorrichtung zur Separation von Feststoffen, die sich in Gülle, Mist und Gärresten befinden, einer Vorrichtung zur Mikrofiltration vorzuschalten ist. Bei der Vorrichtung zur Separation von Feststoffen kann es sich beispielsweise um Pressschnecken, Dekanterzentrifugen oder um eine Anordnung von mehreren, auch hintereinander geschalteten, Trommelfiltern handeln, die auf mechanischen Prozessen basieren. Bei dieser Separation werden vorzugsweise grobe Partikel, d.h. Partikel einer Partikelgröße bevorzugt von 0,99 mm bis ca. 30 µm, besonders bevorzugt von 5 mm bis ca. 30 µm separiert. Bei den groben Partikeln kann es sich auch um Fasern handeln, wobei die Fasern vorzugsweise eine Größe zwischen 7mm und 30µm aufweisen. Bei einem dünnflüssigeren Input, der in die Vorrichtung zur Separation von Feststoffen gelangt, werden auch feinere Partikel, d.h. Partikel mit einer Partikelgröße bis zu ca. 15 µm abgetrennt. Die Menge der separierten Partikel sollte vorzugsweise so bemessen sein, dass nach der Separation der Anteil an organischen Schwebstoffen einen Anteil von ca. 1,2% organischen Sedimenten nicht überschreitet, da sonst der Flux, also der Durchsatz der nachfolgenden Mikrofiltration sinken könnte, was wiederum die Wirtschaftlichkeit des Prozesses gefährden könnte. Die Menge der bei dieser Separation abgeschiedenen Partikel kann anhand von herkömmlichen Methoden ermittelt werden, d.h. beispielsweise über die Berechnung der effektiven Abscheiderate und deren Trockensubstanzanteil. Zur herkömmlichen Bestimmung der Partikelgröße dient vorzugsweise die bereits bekannte Partikelmatrixmessung.

Die Vorrichtung zur Separation von Feststoffen ist mit der Vorrichtung zur Mikrofiltration verbunden. Es hat sich gezeigt, dass in der Vorrichtung zur Mikrofiltration, d.h. im Rahmen einer Mikrofiltration, bei guter Wirtschaftlichkeit und niedriger Wartung Feinpartikel aus dem flüssigen Anteil der Gülle bzw. des Mistes und des Gärrestes abgetrennt werden können, was wiederum - wie Versuche gezeigt haben - für eine anschließende effektive Organikbefreiung von Vorteil ist. Vorzugsweise werden in der Vorrichtung zur Mikrofiltration Mikropartikel einer Größe von mehr als 100 nm (0,1 µm) abgetrennt. Zudem hat sich gezeigt, dass ein steigender Anteil sedimentierter Partikel im Eingang der Mikrofiltration eine sinkende Abscheiderate bezogen auf die Mikropartikel zur Folge haben kann. Die Menge der abgeschieden Mikropartikel kann vorzugsweise herkömmlich über den Abscheidegrad und die im Retentat vorhandene Trockensubstanz bestimmt werden. Auch die Bestimmung der Partikelgröße kann mit einer herkömmlichen Methode erfolgen und zwar vorzugsweise mit Hilfe einer Partikelgrößenmatrix. Die Vorrichtung zur Mikrofiltration arbeitet vorzugsweise nach dem Siebeffekt und weist eine Membran auf. Die Trennung erfolgt dabei nach der Teilchengröße. Teilchen größer als die Membranporen werden von der Membran aufgehalten. Die treibende Kraft für die Mikrofiltration ist ein Druckunterschied an der Membran zwischen Eingangs- und Filtratseite. Die Membran kann dead-end oder cross-flow betrieben werden. In der dead-end Betriebsführung wird das gesamte Wasser durch die Membran gepresst, wohingegen in der cross-flow Betriebsführung das eingeführte Rohwasser entlang der Membranoberfläche zirkuliert wird. Durch die entstehenden Turbulenzen können dann stark verschmutzte Wasserströme behandelt werden. Derartige Vorrichtungen zur Mikrofiltration sind bereits bekannt. Hierzu zählen auch Vorrichtungen in Form von vibrierenden Umkehrosmosen, die den genannten Partikelbereich entfernen.

Erfindungsgemäß ist weiterhin eine Vorrichtung zur Entfernung von organischen Verbindungen der Vorrichtung zur Mikrofiltration nachgeschaltet und mit dieser verbunden. In dieser Anlage wird die in der Flüssigkeit vorhandene Organik - wie z.B. Essigsäure, Proteine, Pestizide, Antibiotika - eben alle organischen Verbindungen - zerstört, d.h. im Rahmen der in der Organikbefreiung werden vorzugsweisediese organischen Moleküle oxidiert und in Kohlendioxid überführt. Hierbei werden ca. 96% der in der Flüssigkeit (d.h. der Gülleflüssigkeit, der Mist-oder Gärrestflüssigkeit) vorhandenen organischen Elemente zerstört. Um dies zu erreichen, ist unter Umständen eine vorgeschaltete Nanofiltration notwendig. Die organischen Elemente weisen eine Größe bis ca. 15 nm auf, die auf herkömmliche Weise, d.h. beispielsweise mit Hilfe eines Rasterelekronenmikroskoses (REM) ermittelt werden kann. Die Menge der zerstörten organischen Verbindungen kann herkömmlich, d.h. beispielsweise mit Hilfe der TOC-(total organic carbon)-Bestimmung ermittelt werden. Bisherige Erfahrungen haben gezeigt, dass eine vollständige Zerstörung der organischen Verbindungen, d.h. dass weniger als 30 ppm TOC im Dünger resultieren, möglich ist.

Die Vorrichtung zur Entfernung von organischen Verbindungen arbeitet vorzugsweise nach dem Elektroresonanzverfahren oder aus einer Kombination aus lonentauscher, UV, Ozonbehandlung und/oder einer Behandlung mit Wasserstoffperoxid.

Um dabei Organik zu oxidieren, d.h. zu zerstören, werden vorteilhafterweise zunächst Radikale gebildet werden. Dies kann entweder mit Hilfe von Strom (Elektroresonanzverfahren oder UV) oder mit Hilfe von Chemikalien (Ozon oder Wasserstoffperoxid) erreicht werden. Nach der Radikalbildung werden diese Radikale mit Sauerstoff oxidiert. Hierzu wird Sauerstoff oder Ozon in die Flüssigkeit (d.h. in die Gülleflüssigkeit, die Mist- oder Gärrestflüssigkeit) eingeblasen.

Alternativ oder zusätzlich kann die Vorrichtung zur Entfernung von organischen Verbindungen auch aus einem Bioreaktor bestehen. Bei dieser Alternative werden die organischen Verbindungen durch Bakterien abgebaut.

Eine praktikable Variante der Erfindung sieht vor, dass zwischen der Vorrichtung zur Mikrofiltration und der Vorrichtung zur Entfernung von organischen Verbindungen eine Vorrichtung zur Nanofiltration angeordnet ist, die mit der Vorrichtung zur Mikrofiltration und der Vorrichtung zur Entfernung von organischen Verbindungen verbunden ist. In Gülle, Mist und Gärresten sind zumeist immer Nanopartikel in der Flüssigkeit vorhanden, die jedoch für den anvisierten anorganischen Dünger nicht benötigt werden. Bei den Nanopartikeln handelt es sich um Partikel mit einem Radius zwischen 100 nm und 15 nm. In der Vorrichtung zur Nanofiltration werden vorzugsweise Partikel dieses Größenbereichs abgeschieden - unabhängig davon, ob sie organisch, anorganisch, metallisch etc. sind. Die Vorrichtung zur Nanofiltration kann aus einer handelsüblichen Wickelfilterkartusche bestehen, welche vorzugsweise nur Partikel einer Größe von weniger als 15 nm passieren lässt. Die Menge der abgeschiedenen Nanopartikel hängt davon ab, wie viele Partikel der Größe zwischen 100nm und 15nm in der Flüssigkeit (d.h. in der Gülleflüssigkeit, der Mist- oder Gärrestflüssigkeit) vorhanden sind.

Eine vorteilhafte Weiterbildung der Erfindung sieht vor, dass der Vorrichtung zur Entfernung von organischen Verbindungen eine Vorrichtung zur Umkehrosmose nachgeschaltet ist, die mit der Vorrichtung zur Entfernung von organischen Verbindungen verbunden ist. In der Flüssigkeit (d.h. in der Gülleflüssigkeit, der Mist-oder Gärrestflüssigkeit) sind Salze vorhanden sind, die mit Hilfe des Instrumentariums der Umkehrosmose vorzugsweise für den anvisierten anorganischen Dünger entwässert werden können. Hierzu wird in der Vorrichtung zur Umkehrosmose mit Hilfe von Druck das Wasser durch Membranen gedrückt und Mineralien zurückgehalten. Als Alternative zur Umkehrosmose könnte die Elektrodialyse eingesetzt werden, bei der Mineralien mit Hilfe von Strom durch die Membran transportiert werden. Es hat sich jedoch im Rahmen der Erfindung herausgestellt, dass die Umkehrosmose für die Entwässerung die wirtschaftlichste Lösung darstellt. Die weitestgehend von organischen Verbindungen befreite Flüssigkeit wird dabei soweit von Wasser befreit, dass sich das Volumen der Gülle, des Mistes oder des Gärrestes auf etwa 25% des Ausgangsvolumens der Gülle des Mistes oder des Gärrestes reduziert. Der Nachweis, dass sich das Volumen auf etwa 25% Ausgangsvolumen reduziert, kann auch hier auf herkömmliche Weise erfolgen und zwar beispielsweise mit Hilfe von Volumenstrommessungen wie beispielsweise mit MID's (Magnetisch-induktiver Durchflussmesser).

Um Konzentrationen, beispielsweise der Konzentration von Stickstoff, in dem anvisierten anorganischen Dünger spezifisch einstellen zu können, sieht eine weitere praktikable Variante der Erfindung vor, dass der Vorrichtung zur Umkehrosmose eine Vorrichtung zur Aufkonzentration von Dünger nachgeschaltet ist, die mit der der Vorrichtung zur Umkehrosmose verbunden ist.

Bei der Vorrichtung zur Aufkonzentration handelt es sich um einen Konzentrator, der vorzugsweise entweder ein herkömmlicher Verdampfer oder eine herkömmliche Elektrodialyse ist. Hierbei wird das in der Gülle, in dem Mist und in dem Gärrest vorhandene Konzentrat soweit weiter aufkonzentriert, dass der Stickstoffanteil in diesem Konzentrat vorzugsweise bei ca. 15 Vol-% liegt. Zum Nachweis dieses Volumenprozents sind vorteilhafterweise in der Vorrichtung zur Aufkonzentration Messstellen vorgesehen, welche die Konzentration an Stickstoff im Eingang der Aufkonzentration messen. Im Falle einer Verdampfung lässt sich die Endkonzentration mit Hilfe der Gewichtsreduktion berechnen. Bei der alternativen Elektrodialyse erfolgt die Messung herkömmlich und vorzugsweise mit Hilfe einer Leitfähigkeitsmessung.

Die Vorrichtung zur Separation von Feststoffen, die sich in Gülle, Mist und Gärresten befinden, kann mit einem Flüssigkeits-Feststoff-Separator, der eine Trenneinrichtung zur Trennung eines Feststoff-Flüssigkeits-Gemisches aufweist, verbunden sein, wobei der Flüssigkeits-Feststoff-Separator auch als Feststoff-Feststoff-Separator ausgebildet ist, dessen Trenneinrichtung auch zur Trennung eines Feststoffes, vorzugsweise in Form von Partikeln in einer Größe bis 15µm, von einem anderen Feststoff eingestellt ist. Ein solcher Flüssigkeits-Feststoff-Separator ist aus der DE 10 2019 108 098.3 bekannt und dient dazu, außer Wasser auch Feststoffanteile, die im Überschuss vorliegen und reduziert werden müssen, von dem während der Separation erzeugten entwässerten Feststoff abzutrennen. Durch die Verbindung dieses Separators mit der erfindungsgemäßen Vorrichtung zur Separation von Feststoffen ist vorteilhafterweise gewährleistet, dass der Separationsprozess in dieser Stufe beschleunigt werden kann, da schon vorab Feststoffanteile vorzugsweise in Form von Partikeln einer Größe bis 15µm separiert worden sind.

Ein Verfahren für die Behandlung eines Produktes aus Gülle, Mist, Gärresten ist Gegenstand von Anspruch 6, wobei das Verfahren folgende Verfahrensschritte aufweist:
a) Einleiten des Produktes in eine Vorrichtung zur Separation von Feststoffen, insbesondere zur Separation von groben Partikeln in der Größe zwischen 0,99 mm und 30 µm, besonders bevorzugt von 5 mm bis ca. 30 µm, besonders bevorzugt in der Größe zwischen 5mm und 30 µm und insbesondere von Fasern, bevorzugt in der Größe zwischen 7mm und 30 µm, in der Partikel des Produktes separiert werden;
b) Weiterleitung des in Verfahrensschritts a) separierten Produktes in eine Vorrichtung zur Mikrofiltration, in der aus dem Produkt Mikropartikel gefiltert werden und
c) Weiterleitung des in Verfahrensschritt b) gefilterten Produkts in eine Vorrichtung zur Entfernung von organischen Verbindungen, in der organische Verbindungen des Produktes entfernt werden.

Weitere, die Erfindung verbessernde Maßnahmen, werden nachstehend mit der Beschreibung von bevorzugten Ausführungsbeispielen der Erfindung anhand der Figuren näher dargestellt. Dabei können die in den Ansprüchen und in der Beschreibung erwähnten Merkmale jeweils einzeln für sich oder in beliebiger Kombination erfindungswesentlich sein. Dabei ist zu beachten, dass die in den Figuren dargestellten Ausführungsbeispiele nur beschreibenden Charakter haben und nicht dazu gedacht sind, die Erfindung in irgendeiner Form einzuschränken.

Die einzige Figur zeigt in schematischer Darstellung:

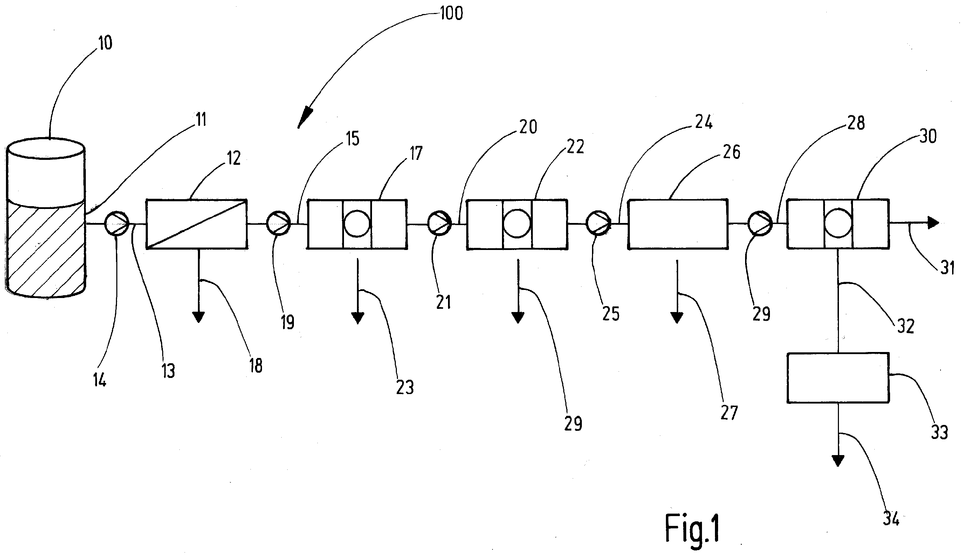

- Fig. 1: in perspektivischer Ansicht eine Anlage gemäß der Erfindung, in der das erfindungsgemäße Verfahren abläuft.

Figur 1 zeigt eine Anlage für die Behandlung von Gülle, Mist und Gärresten, die mit dem Bezugszeichen 100 versehen ist und einen Güllebehälter 10 aufweist, der aus Beton oder Edelstahl gefertigt ist und mit einer in Figur 1 nicht gezeigten Leckage-überwachung und einem Rührwerk versehen ist.

Der als Rundbehälter ausgebildete Güllebehälter 10 ist, wie aus Figur 1 ersichtlich, zum Teil mit flüssiger Gülle 11 gefüllt, der über einen in Figur 1 nicht gezeigten Anschluss von einem Güllewagen 10 befüllt wird.

Wie aus Figur 1 weiter ersichtlich ist, weist die Anlage 100 eine Vorrichtung 12 zur Separation von Feststoffen, die sich in der flüssigen Gülle 11 befinden, auf. Die Vorrichtung 12 ist mit dem Güllebehälter 10 über die Leitung 13 verbunden, die als PE-oder Stahlleitung und doppelwandig ausgebildet ist. Die Pumpe 14 befindet sich in der Leitung 13 zwischen dem Güllebehälter 10 und der Vorrichtung 12.

In einem ersten Schritt wird die flüssige Gülle 11 (bestehend aus Gülle und/oder Mist und/oder Gärresten) aus dem Güllebehälter 10 über die Leitung 13 zur Vorrichtung 12 gepumpt.

Die Vorrichtung 12 ist eine Pressschnecke, in der grobe Partikel 18 der flüssigen Gülle 11, d.h. Partikel einer Partikelgröße von ca. 0,99 mm bis ca. 30 µm separiert werden.

Die Anlage 100 weist weiterhin, wie Figur 1 weiter verdeutlicht, eine Vorrichtung 17 zur Mikrofiltration auf, die der Vorrichtung 12 nachgeschaltet ist und mit dieser verbunden ist. Die Verbindung ist über die Leitung 15 gegeben, die mit der Pumpe 19 versehen ist. Auch die Leitung 15 ist als PE- oder Stahlleitung und doppelwandig ausgebildet. Die von den groben Partikeln 18 befreite flüssige Gülle 11 wird dabei über die Leitung 15 zur Vorrichtung 17 gepumpt und von den Mikropartikeln 23 befreit. Die Vorrichtung 17 zur Mikrofiltration arbeitet nach dem Siebeffekt und weist eine Membran auf. Die Trennung erfolgt dabei nach der Teilchengröße. Teilchen größer als die Membranporen werden von der Membran aufgehalten. Die treibende Kraft für diese Mikrofiltration ist ein Druckunterschied an der Membran zwischen Eingangs- und Filtratseite in der Vorrichtung 17.

Aus Figur 1 geht auch hervor, dass die Vorrichtung 26 zur Entfernung von organischen Verbindungen Bestandteil der Anlage 100 ist. Zwischen der Vorrichtung 17 und der Vorrichtung 26 ist eine Vorrichtung 22 zur Nanofiltration angeordnet, die mit der Vorrichtung 17 und der Vorrichtung 26 verbunden ist. Die Verbindungen sind über die Leitungen 20, 24, die als PE-Leitungen ausgebildet sind, gegeben, die mit den Pumpen 21, 25 versehen sind.

Nachdem in der Vorrichtung 17 die Mikropartikel 23 von der flüssigen Gülle 11 entfernt worden sind, wird diese über die Leitung 20 zur Vorrichtung 22 gepumpt und von den Nanopartikeln 29 befreit. Die von den Nanopartikeln 29 befreite flüssige Gülle 11 wird wiederum über die Leitung 24 zur Vorrichtung 26 gepumpt und von organischen Verbindungen 27 befreit. In diesem Stadium des Verfahrens befinden sich noch Stickstoff, Kalium, Schwefel, Calcium, Magnesium, d.h. kein bzw. nahezu kein Phosphor in der flüssigen Gülle 11, und zwar in den ungefähren Verhältnissen von 15:14:5:2:1, sowie metallische Ionen und noch sehr wenige organische Verbindungen.

Eine weitere Komponente der in Figur 1 dargestellten Anlage 100 ist die Vorrichtung 30 zur Umkehrosmose, die der Vorrichtung 26 nachgeschaltet ist und mit dieser über die Leitung 28 verbunden ist. In der Leitung befindet sich die Pumpe 29a.

Die weitestgehend von organischen Verbindungen 27 befreite flüssige Gülle 11 wird durch die Leitung 28 zur Vorrichtung 30 gepumpt und soweit von Wasser befreit, dass sich das Volumen der flüssigen Gülle 11 auf etwa 25% des Ausgangsvolumens der flüssigen Gülle 11 reduziert. In der in Figur 1 beschriebenen Ausführungsform der Erfindung beträgt das Ausgangsvolumen der flüssigen Gülle 11 ca. 10 m³. Auch in diesem Stadium des Verfahrens befinden sich noch Stickstoff, Kalium, Schwefel, Calcium, Magnesium, und zwar in den ungefähren Verhältnissen von 15:14:5:2:1, sowie metallische Ionen und noch sehr wenige organische Verbindungen in der Flüssigkeit.

Wie Figur 1 weiter verdeutlicht, ist der Vorrichtung 30 eine Vorrichtung 33 zur Aufkonzentration von Dünger, d.h. der verbliebenen flüssigen Gülle 11 nachgeschaltet, die mit der Vorrichtung 30 über die Leitung 32 verbunden ist. In der Leitung 32 befindet sich ebenfalls eine Pumpe.

Das vom Wasser befreite Nährstoffkonzentrat wird in die Vorrichtung 33 geleitet und darin auf eine Stickstoff-Konzentration von ca. 15% gebracht. Das auf ca. 15% Stickstoff aufkonzentrierte Düngerkonzentrat ist das Endprodukt, d.h. ein Mehrkomponenten-Handelsdünger. Bei diesem Handelsdünger handelt es sich um einen mineralischen Dünger, was bedeutet, dass dieser Dünger frei von Organik (organischen Verbindungen) ist, also nur noch Mineralien beinhaltet.

## Patentansprüche

1. Anlage (100) für die Behandlung von Gülle, Mist und Gärresten mit einer Vorrichtung (12) zur Separation von Feststoffen, die sich in Gülle, Mist und Gärresten befinden, wobei die Feststoffe insbesondere grobe Partikel bevorzugt in der Größe zwischen 0,99 mm und 30 µm sind, wobei der Vorrichtung (12) zur Separation von Feststoffen eine Vorrichtung (17) zur Mikrofiltration nachgeschaltet ist und mit dieser verbunden ist, **dadurch gekennzeichnet, dass** eine Vorrichtung (26) zur Entfernung von organischen Verbindungen der Vorrichtung zur Mikrofiltration (17) nachgeschaltet ist und mit dieser verbunden ist.

2. Anlage nach Anspruch 1, **dadurch gekennzeichnet, dass** zwischen der Vorrichtung (17) zur Mikrofiltration und der Vorrichtung (26) zur Entfernung von organischen Verbindungen eine Vorrichtung (22) zur Nanofiltration angeordnet ist, die mit der Vorrichtung (17) zur Mikrofiltration und der Vorrichtung (26) zur Entfernung von organischen Verbindungen verbunden ist.

3. Anlage nach Anspruch 1 oder 2, **dadurch gekennzeichnet, dass** der Vorrichtung (26) zur Entfernung von organischen Verbindungen eine Vorrichtung (30) zur Umkehrosmose nachgeschaltet ist, die mit der Vorrichtung (26) zur Entfernung von organischen Verbindungen verbunden ist.

4. Anlage nach Anspruch 3, **dadurch gekennzeichnet, dass** der Vorrichtung (30) zur Umkehrosmose eine Vorrichtung (33) zur Aufkonzentration von Dünger nachgeschaltet ist, die mit der der Vorrichtung (30) zur Umkehrosmose verbunden ist.

5. Anlage nach einem der vorhergehenden Ansprüche, **dadurch gekennzeichnet, dass** die Vorrichtung (12) zur Separation von Feststoffen, in der sich Gülle, Mist und Gärrest befinden, mit einem Flüssigkeits-Feststoff-Separator, der eine Trenneinrichtung zur Trennung eines Feststoff-Flüssigkeits-Gemisches aufweist, verbunden ist, wobei der Flüssigkeits-Feststoff-Separator auch als Feststoff-Feststoff- Separator ausgebildet ist, dessen Trenneinrichtung auch zur Trennung eines Feststoffes, vorzugsweise in Form von Partikeln in einer Größe bis 15µm, von einem anderen Feststoff eingestellt ist.

6. Verfahren für die Behandlung eines Produktes (11) aus Gülle, Mist, Gärresten mit folgenden Verfahrensschritten:
a) Einleiten des Produktes (11) in eine Vorrichtung (12) zur Separation von Feststoffen, insbesondere zur Separation von groben Partikeln bevorzugt in der Größe zwischen 0,99 mm und 30 µm, in der Partikel (18) des Produktes (11) separiert werden;
b) Weiterleitung des in Verfahrensschritts a) separierten Produktes (11) in eine Vorrichtung (17) zur Mikrofiltration, in der aus dem Produkt (11) Mikropartikel (23) gefiltert werden,
**dadurch gekennzeichnet, dass** das in Verfahrensschritt b) gefilterte Produkt (11) in eine Vorrichtung (26) zur Entfernung von organischen Verbindungen weitegeleitet wird, in der organische Verbindungen (27) des Produktes (11) entfernt werden.

7. Verfahren nach Anspruch 6, **dadurch gekennzeichnet, dass** das in Verfahren c) von organischen Verbindungen befreite Produkt (11) in eine Vorrichtung (30) zur Umkehrosmose geleitet wird, in der es entwässert wird.

8. Verfahren nach Anspruch 6 oder 7, **dadurch gekennzeichnet, dass** vor Verfahrensschritt c) das Produkt (11) in eine Vorrichtung (22) zur Nanofiltration geleitet wird, in der aus dem Produkt (11) Nanopartikel (29) gefiltert werden.

9. Verfahren nach einem der Ansprüche 7 oder 8, **dadurch gekennzeichnet, dass** das Produkt (11) in eine Vorrichtung zur Aufkonzentration von Dünger geleitet wird, in der das Produkt (11) aufkonzentriert wird.

10. Verfahren nach einem der Ansprüche 6 bis 9, **dadurch gekennzeichnet, dass** in die Vorrichtung (12) zur Separation von Feststoffen aus Verfahrensschritt a) ein Produkt (11) aus Gülle, Mist und Gärresten aus einem Flüssigkeits-Feststoff-Separator geleitet wird, wobei in dem Flüssigkeits-Feststoff-Separator ein in dem Produkt (11) enthaltene Feststoff entwässert wird und während der Entwässerung auch Feststoff, vorzugsweise in Form von Partikeln in einer Größe bis 15µm, von dem zu entwässernden Feststoff separiert wird.
